Europäisches Patentamt

European Patent Office

Office européen des brevets

(11) Veröffentlichungsnummer: **0 473 862 A1**

## EUROPÄISCHE PATENTANMELDUNG

(21) Anmeldenummer: **90810671.9**

(22) Anmeldetag: **05.09.90**

(51) Int. Cl.⁵: **A61C 5/00**

(43) Veröffentlichungstag der Anmeldung:
**11.03.92 Patentblatt 92/11**

(84) Benannte Vertragsstaaten:
**AT BE CH DE DK ES FR GB GR IT LI LU NL SE**

(71) Anmelder: **Nordin, Harald E.**
**Villa Amphion**
**CH-1822 Chernex(CH)**

(72) Erfinder: **Nordin, Harald E.**
**Villa Amphion**
**CH-1822 Chernex(CH)**

(74) Vertreter: **Steiner, Martin et al**
**c/o AMMANN PATENTANWÄLTE AG BERN**
**Schwarztorstrasse 31**
**CH-3001 Bern(CH)**

(54) Retentionsstift zur Behandlung zerstörter Zähne und Instrument zum Einsetzen des Stiftes.

(57) Der Retentionsstift (4) zur Behandlung zerstörter Zähne besitzt eine Bohrkrone (5), ein Gewinde (6) und als Kraftübertragungsmittel einen Schlitz (7), in den ein Nocken (9) eines Instrumentes (8) passt, das in ein zahnärztliches Handstück steckbar ist, und ist vorzugsweise hohl.

Dieser Retentionsstift kann mit dem dazu passenden Instrument direkt in den Zahn eingebohrt werden, wodurch sowohl Material als auch Zeit gespart wird.

FIG.2

Retentionsstifte und ein Gerät mit einem diese Stifte enthaltenden Magazin sind beispielsweise aus der EP-B-164 481 bekannt. Dabei handelt es sich um einklebbare Retentionsstifte, die in einem Magazin enthalten und über Sollbruchstellen miteinander verbunden sind. Zum Einsetzen wird in der Regel mit einem Bohrer entsprechender Grösse, der von dem zahnärztlichen Handstück angetrieben ist, ein Loch vorgebohrt und der Stift mittels dem Gerät eingesetzt, bzw. eingeklebt. Das ganze Verfahren ist relativ aufwendig, indem zuerst der geeignete Bohrer ausgewählt und anschliessend in das Handstück eingesetzt werden muss und nach dem Bohren des Loches das Gerät geladen und der Stift eingesetzt wird.

Ausserdem ist zu beachten, dass das beschriebene Gerät mit den Retentionsstiften nur von einem Teil der Zahnärzte verwendet wird, während normalerweise die Retentionsstifte ohne Magazin einzeln eingesetzt werden, wobei relativ viel Material weggeworfen werden muss und ausserdem die Handhabung der einzelnen Stifte noch aufwendiger ist als mittels dem Gerät mit Magazin.

Es ist davon ausgehend Aufgabe der vorliegenden Erfindung, einen Retentionsstift anzugeben, der wesentlich einfacher eingesetzt werden kann und der den Materialverschleiss erheblich reduziert. Ein Stift der diese Aufgabe löst sowie ein Instrument, um diesen Stift einzusetzen sind in den Ansprüchen definiert.

Die Erfindung wird im folgenden anhand einer Zeichnung eines Ausführungsbeispiels näher erläutert.

Fig. 1     zeigt schematisch die Verwendung solcher Retentionsstifte und

Fig. 2     zeigt im Schnitt und im vergrösserten Massstab den erfindungsgemässen Retentionsstift sowie das Instrument zum Einsetzen desselben.

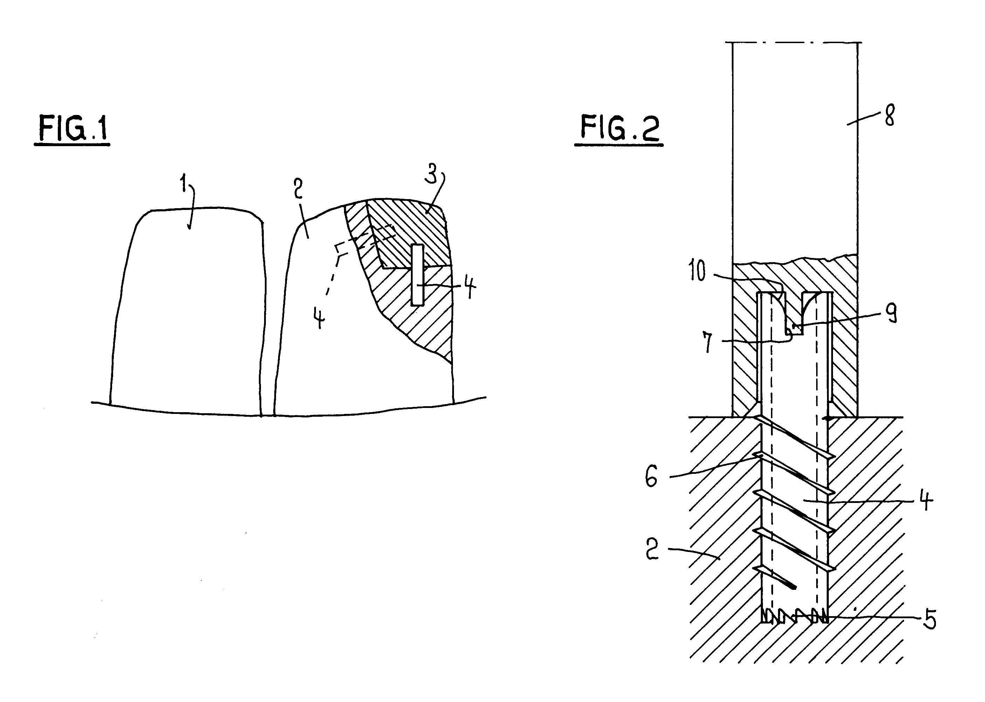

In Fig. 1 erkennt man zwei schematisch gezeichnete Zähne 1 und 2, wobei der Zahn 2 ein ausgebessertes Teil 3 aufweist, das mit beispielsweise zwei Retentionsstiften 4 verankert ist.

Im Schnitt der Fig. 2 erkennt man den Retentionsstift 4, der unten eine Bohrkrone 5 und am Schaft, der im Zahn 2 verankert werden soll, ein Gewinde 6 aufweist. Aus dieser Fig. 2 geht ferner hervor, dass der Retentionsstift hohl ist, damit das herausgebohrte Material gut entfernt werden kann und auch um Material zu sparen. Wenngleich vorteilhaft, ist es nicht unerlässlich, dass der Stift hohl ist. Am der Bohrkrone 5 entgegengesetzten Ende weist der Retentionsstift Kraftübertragungsmittel, in vorliegendem Fall einen Schlitz 7, auf. Das Instrument 8 zum Eindrehen des Stiftes ist mindestens an seinem unteren Ende hohl, um den Retentionsstift zu umfassen und weist einen dem Schlitz 7 entsprechenden Nocken 9 auf. Als Kraftübertragungsmittel kommen selbstverständlich auch andere Formen als Schlitze in Frage, beispielsweise ein Kreuzschlitz oder eine Vier- oder Sechskantimbusanordnung oder ähnliches. Die oberen Kanten des Schlitzes 7 weisen eine Abrundung 10 auf, um ein Herausgleiten des Eindrehinstrumentes zu erleichtern. Dies geschieht in der in Fig. 2 gezeichneten Stellung automatisch, denn dann stützt sich der untere Rand des Instrumentes auf der Zahnoberfläche ab. Der obere Teil des Eindrehinstrumentes ist ausgebildet, in ein zahnärztliches Handstück eingesetzt zu werden.

Zweckmässigerweise sind die Retentionsstifte in einer Platte gesteckt, so dass der Zahnarzt lediglich das Handstück mit dem aufgesteckten Instrument über einen Retentionsstift stülpen muss, um dann anschliessend den Retentionsstift im Zahn einzudrehen. Dies bedeutet neben der Beschleunigung des Verfahrens auch selbstverständlich den Wegfall von Bohrer, womit dieses Verfahren auch vom Material her kostengünstiger ist. Ausserdem kann der gesamte Retentionsstift verwendet werden, ohne dass Abfall entsteht. Als beispielhafte und keineswegs einschränkende Angabe sei erwähnt, dass der Retentionsstift bevorzugt aus Titan hergestellt wird und eine Länge von 5 mm und einen Durchmesser von 0,75 mm aufweisen kann.

**Patentansprüche**

1.     Retentionsstift zur Behandlung zerstörter Zähne und Instrument zum Einsetzen des Stiftes, dadurch gekennzeichnet, dass der Retentionsstift (4) eine Bohrkrone (5) und ein Gewinde (6) aufweist sowie Mittel (7) zur Kraftübertragung von einem Instrument (8), das dazu komplementäre Kraftübertragungsmittel (9) aufweist und in ein zahnärztliches Handstück steckbar ist.

2.     Retentionsstift nach Anspruch 1, dadurch gekennzeichnet, dass er hohl ist.

3.     Retentionsstift und Instrument nach Anspruch 1 oder 2, dadurch gekennzeichnet, dass die Kraftübertragungsmittel beim Stift aus einem Schlitz (7) und beim Instrument aus einem entsprechenden Nocken (9) bestehen.

4.     Retentionsstift nach Anspruch 3, dadurch gekennzeichnet, dass der Schlitz (7) oben eine Abrundung (10) besitzt.

5.     Retentionsstift nach einem der Ansprüche 1 bis 4, dadurch gekennzeichnet, dass er aus Titan gefertigt ist.

FIG.1

FIG.2

EP 0 473 862 A1

**Europäisches Patentamt**

# EUROPÄISCHER RECHERCHENBERICHT

Nummer der Anmeldung

## EP 90 81 0671

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | FR-A-2 516 784 (SERBAN)<br>* Beschreibung; Figuren 5,6 *<br>– – – | 1,2,3 | A 61 C 5/00 |
| Y | US-A-4 871 313 (MAILEFER)<br>* Anspruch 1; Figuren *<br>– – – | 1,2,3 | |
| A | GB-A-2 197 205 (SANKIN)<br>* Seite 1, Zeilen 105-127; Figur 1 *<br>– – – | 1-3 | |
| A | FR-A-2 050 198 (SCIALOM)<br>* Beschreibung; Figuren *<br>– – – | 1,3,5 | |
| A | EP-A-0 145 652 (STRAUMANN)<br>* Figuren 2,5,7 *<br>– – – – – | 3,4 | |

RECHERCHIERTE SACHGEBIETE (Int. Cl.5)

A 61 C

Der vorliegende Recherchenbericht wurde für alle Patentansprüche erstellt

| Recherchenort | Abschlußdatum der Recherche | Prüfer |
|---|---|---|
| Den Haag | 19 März 91 | VANRUNXT J.M.A. |